# EUROPÄISCHE PATENTSCHRIFT

(11) **EP 2 140 036 B1**
(45) Veröffentlichungstag und Bekanntmachung des Hinweises auf die Patenterteilung: **19.01.2011**
(21) Anmeldenummer: 08716124.6
(22) Anmeldetag: 29.02.2008
(51) Int. Cl.: C22B 7/00, C22B 7/04, C22B 34/22, F23D 1/00

(54) **VERFAHREN ZUR HERSTELLUNG EINES SCHWERMETALLANGEREICHERTEN, KOHLENSTOFFARMEN KONZENTRATS AUS KOHLENSTOFFREICHEN, SCHWERMETALLHALTIGEN RÜCKSTÄNDEN INSBESONDERE DER ERDÖLVERARBEITUNG**
METHOD FOR THE PRODUCTION OF A LOW CARBON CONCENTRATE RICH IN HEAVY METAL, PRODUCED FROM CARBON-RICH HEAVY METAL-CONTAINING RESIDUES, FROM CRUDE OIL REFINING IN PARTICULAR
PROCEDE DE FABRICATION D'UN CONCENTRE ENRICHI EN METAUX LOURDS, PAUVRE EN CARBONE, A PARTIR DE RESIDUS RICHES EN CARBONE, CONTENANT DES METAUX LOURDS, NOTAMMENT DANS LE TRAITEMENT DU PETROLE

(30) Priorität: 06.03.2007 DE 102007010776
(43) Veröffentlichungstag der Anmeldung: 06.01.2010
(73) Patentinhaber: GfE Metalle und Materialien GmbH, 90431 Nürnberg (DE)
(72) Erfinder: SATTELBERGER, Siegfried, 90431 Nürnberg (DE); HESS, Hans, 90431 Nürnberg (DE)
(74) Vertreter: Hübner, Gerd
(86) Internationale Anmeldenummer: PCT/EP2008/001600
(87) Internationale Veröffentlichungsnummer: WO 2008/107120

(56) Entgegenhaltungen:
- WO-A-02/066895
- DE-C1- 4 125 517
- US-A- 4 645 651
- US-A- 4 651 656
- US-A- 6 024 931
- US-A- 6 148 745

## Beschreibung

Die Erfindung betrifft ein Verfahren zur Herstellung eines schwermetallangereicherten, kohlenstoffarmen Konzentrats aus kohlenstoffreichen, schwermetallhaltigen Rückständen insbesondere der Erdölverarbeitung.

Zum Hintergrund der Erfindung ist festzuhalten, dass Erdöle je nach ihrer Provenienz neben anderen anorganischen Bestandteilen auch Vanadium und Nickel enthalten. Hohe Konzentrationen an diesen Metallen sind bei Erdölen aus Russland und insbesondere aus Venezuela festzustellen. So beträgt der Vanadium-Anteil bei venezuelanischen Ölen bis zu 1800 ppm.

Bei der Verarbeitung von Erdöl in Raffinerien und bei der Verbrennung von Schwerölen in Kraftwerken fallen nun Aschen und Rückstände an, die - je nach Öl-Provenienz - vergleichsweise hohe Anteile an Vanadium und Nickel enthalten. Als Beispiel im Rahmen von Raffinerieprozessen sind zu nennen verbrauchte Katalysatoren in Crack- und Entschwefelungsprozessen oder hochkohlenstoffhaltiger Ruß bei der Abwasseraufbereitung von Vergasungsanlagen. In Kraftwerken fallen kohlenstoffreiche Filterstäube aus der elektrostatischen Gasreinigung (EGR) an. Schließlich sind Syncrude-Anlagen zu nennen, die zur Herstellung eines künstlichen Rohöls aus teerartigem Erdölvorkommen insbesondere aus Venezuela und Kanada dienen. Zur Herstellung des sogenannten Syncrude-Öls wird ein teerartiges Förderprodukt bei hohen Temperaturen katalytisch gecrackt und damit pumpbar gemacht. Die dabei benutzten Katalysatoren werden im Lauf der Zeit durch Ablagerungen von Vanadium, Nickel und Kohlenstoff unwirksam und müssen ausgetauscht werden. Sie enthalten bis zu 15% Vanadium und ca. 5% Nickel, so wie organische Bestandteile in Form von Teer, Öl oder Koks bis zu 50%.

Die vorstehend umrissenen kohlenstoffreichen, schwermetallhaltigen Rückstände werden in der chemischen Industrie als Rohstoff für die Herstellung von Vanadiumoxiden und Vanadiumchemikalien eingesetzt. Der enthaltene Kohlenstoff erschwert dabei die Verwendung in der Vanadiumchemie und muss folglich vorher abgetrennt werden. Sofern es sich dabei um anhaftende Öle handelt, ist deren Abbrand bei Temperaturen von ca. 500 bis 600°C problemlos möglich. Sehr schwierig gestaltet sich jedoch der Abbrand von festem Kohlenstoff, da dafür Temperaturen von über 1000°C notwendig sind und dann das Vanadium zum Teil in schmelzflüssiger Form vorliegt. Die beim Kohlenstoffabbrand entstehende Asche neigt aufgrund der vorhandenen Schmelzphasen zum Verklumpen und zum Anbacken an den Wänden der Verbrennungsaggregate. Ein weiteres Problem ist der teilweise sehr hohe Kohlenstoffgehalt der Rückstände, der Werte von über 90% erreichen kann. Der damit verbundene hohe Energieinhalt erschwert den Kohlenstoffabbrand zusätzlich, da die Verbrennungsanlagen auch auf die hohe thermische Belastung ausgelegt sein müssen.

Im Stand der Technik werden in diesem Zusammenhang derzeit im Wesentlichen zwei Verfahren eingesetzt. Einerseits ist dies das Verbrennen in Etagen- oder Drehrohröfen bei einer relativ niedrigen Temperatur von ca. 500 bis 600°C, wobei der Kohlenstoff langsam oxidiert wird. Dadurch sind sehr lange Verweilzeiten von bis zu 24 Stunden und entsprechend große Ofeneinheiten erforderlich, um die in Raffinerien üblicherweise großen Mengen an Rückständen verarbeiten zu können. Dieser Prozess wird industriell eingesetzt, ist aber kostenaufwändig. Die entstehenden Aschen sind mit einem Kohlenstoffgehalt von weniger als 2% im Regelfall praktisch kohlenstofffrei und für die weitere Verarbeitung sehr gut geeignet. Nachteilig ist, dass die in den Rückständen enthaltene Energie verloren geht.

Als weiterer Prozess zur Kohlenstoff-Abreicherung der hier in Rede stehenden Vanadium-haltigen Rückstände ist die Naphtha-Extraktion des Kohlenstoffs aus dem Rußwasser von Vergasungsanlagen zu nennen. Bei der Druckvergasung von Asphalten und Schwerölen in Raffinerien zur Gewinnung von Synthesegas wird das heiße Gasgemisch in einer Quenche mit Wasser schlagartig abgekühlt, wobei sogenanntes Rußwasser anfällt. Dieses sogenannte "blackwater" mit allen anorganischen Bestandteilen wird einer Naphtha-Behandlung unterzogen. Dazu wird das "blackwater" mit Naphtha vermischt, wobei der Kohlenstoff (Ruß) in die organische Naphthaphase übergeht und so vom Wasser abgetrennt wird. Das kohlenstoffarme Wasser wird als sogenanntes "greywater" bezeichnet. Die anorganischen Bestandteile verbleiben im "greywater". Durch Strippung mit heißem Schweröl wird das Naphtha ausgetrieben, kondensiert und wieder der blackwater-Behandlung zugeführt. Der Kohlenstoff geht bei diesem Behandlungsschritt in das Schweröl über. Dieses Gemisch wird wieder in die Druckvergasungsanlage zurückgeführt. Das rußarme Wasser wird aufbereitet, die anorganischen Bestandteile werden ausgeflockt und abfiltriert. Der erhaltene Filterkuchen ist dann sehr gut für die Gewinnung der Schwermetalle, insbesondere von Vanadium- oder auch nickelhaltigen Zwischenprodukten geeignet.

Für die in diesem Zusammenhang notwendige Aufbereitung der entsprechenden V/Ni-haltigen Rückstände ist der Aufschluss von Vanadium zu einer wasserlöslichen Verbindung notwendig. Hierfür ist das sogenannte Kurztrommel-Ofenverfahren bekannt, wie es ausführlich in der DE 34 02 357 A1 beschrieben ist. Dabei werden die vanadiumimitigen Ölrückstände mit Soda vermischt und bei Temperaturen von 800 bis 950°C im Kurztrommelofen eingeschmolzen. Dadurch bildet sich wasserlösliches Natriumvanadat und Nickelstein. Diese beiden Phasen sind nicht mischbar und können daher nach dem Erkalten separiert werden.

Nachteilig bei diesem Verfahren ist, dass bei hoch koblenstoffhaltigen Rückständen der Kohlenstoff unter den gegebenen Reaktionsbedingungen nur sehr langsam abbrennt und dadurch Behandlungszeiten von bis zu 20 Stunden notwendig sind. Das Verfahren kann daher nicht mehr wirtschaftlich durchgeführt werden.

Die US 4 645 651 A offenbart ein Verfahren zur Herstellung eines schwermetallhaltigen, wasserlöslichen Schmelzproduktes in Form von Vanadium-Verbindungen aus Vanadium enthaltenden Rückständen, wobei die Rückstände als Verbrennungsprodukt unter Zugabe von Soda in einen Schmelzofen eingebracht werden, um ein schwermetallhaltiges, wasserlösliches Schmelzprodukt, nämlich die wasserlösliche Vanadiumverbindung Na₄V₂O₇ zu bilden.

Der Erfindung liegt die Aufgabe zugrunde, ein Verfahren zur Herstellung eines schwermetallhaltigen Konzentrats aus kohlenstoffreichen, schwermetallhaltigen Rückständen insbesondere der Erdölverarbeitung anzugeben, das im Hinblick auf die notwendige Abreicherung des Kohlenstoffgehaltes wirtschaftlich und umweltfreundlich - insbesondere unter Verzicht auf eine Abgasentschwefelungsanlage bei der Anwendung des Verfahrens - durchführbar ist und - je nach Ausführung - zusätzliche Nutzenergie erzeugen kann.

Basis der Lösung für diese Aufgabe ist das Grundkonzept, den koblenstoffreichen, schwermetallhaltigen Rückstand in einem Feststoffbrenner unter Abreicherung des Kohlenstoffgehaltes zu verbrennen, wobei ein kohlenstoffarmes, schwermetallangereichertes Verbrennungsprodukt in Form einer Asche gebildet wird. Diese kann zur Gewinnung der Schwermetalle, insbesondere von Vanadium und Nickel verwendet werden.

Neben der eigentlichen Kohlenstoffabreicherung kann die bei der Verbrennung im Feststoffbrenner entstehende Abwärme zur Energieerzeugung genutzt werden. Bevorzugtermaßen kann beispielsweise ein Schmelzofen (Kurztrommelofen) dadurch beheizt werden. Ferner wird also die in den kohlenstoffreichen, schwermetallhaltigen Rückständen enthaltene Energie genutzt, was einen Beitrag zur Schonung von Primärenergiereserven und zur nachhaltigen Minderung des industriellen Kohlendioxidausstoßes leistet.

Durch die gleichzeitige Zudotierung von Soda in den Feststoffbrenner wird die Bindung von Schwefeldioxid drastisch reduziert, so dass beim Betrieb der für das Verfahren vorgesehenen Anlage im Regelfall auf eine Abgasentschwefelungsanlage verzichtet werden kann.

Vorzugsweise wird der Feststoffbrenner mit Sauerstoff als Oxidationsmittel beschickt, wodurch hohe Brennertemperaturen erreicht, aber gleichzeitig die Abgasvolumina erheblich verringert werden.

Weitere Merkmale, Einzelheiten und Vorteile der Erfindung ergeben sich aus der nachfolgenden Beschreibung, in der Ausführungsbeispiele anhand der beigefügten Zeichnungen näher erläutert werden. Es zeigen:
- Fig. 1: eine schematische Darstellung einer Kurztrommelofen- Anlage mit Feststoffbrenner, und
- Fig. 2: einen schematischen Schnitt durch einen Feststoffbrenner.

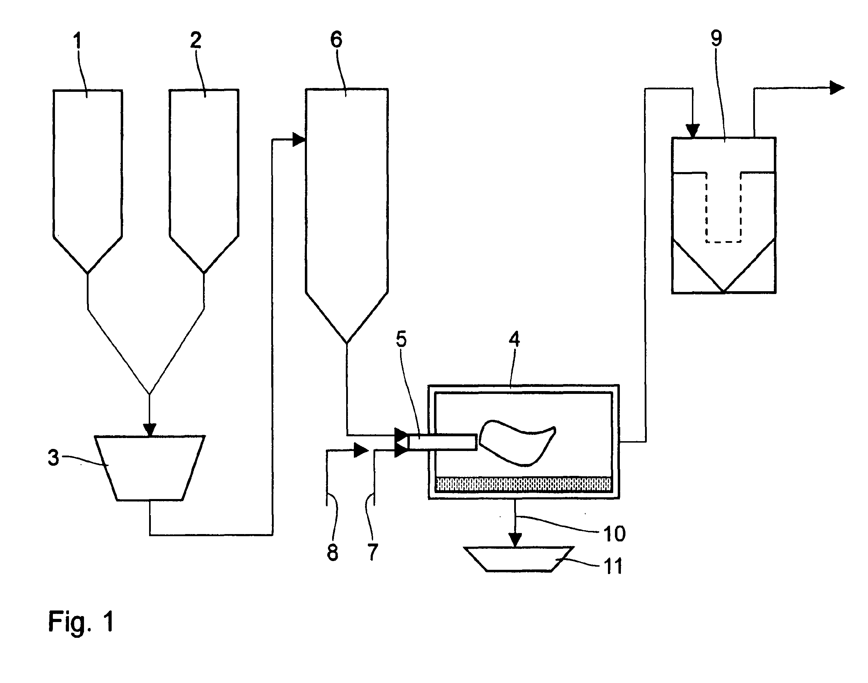

Wie aus Fig. 1 hervorgeht, werden die zu verarbeitenden V- und Ni-haltigen Rückstände einerseits sowie das ebenfalls eingesetzte Soda andererseits jeweils in Silos 1, 2 bevorratet. Von dort können entsprechende Mengen abgezogen und in einem Mischer 3 vermengt werden.

Kernstück der Anlage ist ein Kurztrommelofen 4, der von einem Feststoffbrenner 5 beheizt wird. Das als Brennstoff für den Feststoffbrenner dienende Gemenge aus dem Mischer 3 wird dabei über eine pneumatische Förderanlage 6 vom Mischer 3 in den Feststoffbrenner 5 gefördert. Letzterer ist zur Einstellung der Brennbedingungen mit einer Sauerstoffzufuhr 7 und mit einer Brenngaszufuhr 8 beispielsweise für Erdgas ausgerüstet.

Abgasseitig ist an dem Kurztrommelofen 4 ein Staubfilter 9 angeschlossen, über den die Abgase des Feststoffbrenners 5 geführt werden.

Die Schlacke wird aus dem Kurztrommelofen 4 nach Durchführung des Schmelzvorganges abgezogen (Pfeil 10) sowie in eine Kokille 11 abgegossen und abgekühlt.

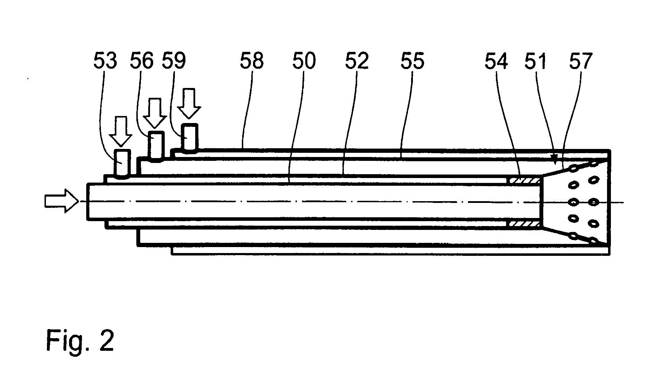

Der in Fig. 2 dargestellte Feststoffbrenner 5 ist aus mehreren konzentrisch ineinander geschachtelten Röhren aufgebaut. Über die zentrale Röhre 50 wird der Feststoff mit Hilfe der oben erwähnten pneumatischen Förderanlage 6 eingeblasen und zur eigentlichen Brennzone 51 gefördert.

Durch eine die zentrale Röhre 50 umgebende Röhre 52 wird Primärsauerstoff über einen entsprechenden Anschluss 53 eingeführt und in der Brennzone 51 über Verdrallungselemente 54 verwirbelt.

Radial nach außen wird über eine weitere konzentrische Röhre 55 über einen Anschluss 56 sekundär Sauerstoff zugeführt, der über einen Mündungskonus 57 in die Brennzone 51 eintritt.

Schließlich kann über eine äußere Röhre 58 mit einem entsprechenden Anschluss 59 Brenngas zur Brennzone 51 geführt werden, um die Brenntemperatur bei zu geringem Energieinhalt des Feststoffes anzuheben.

Im Folgenden werden nun zwei Ausführungsbeispiele für den Betrieb der Kurztrommelofen-Anlage gegeben:

### Ausführungsbeispiel 1

In den Kurztrommelofen 4 werden 2,5 Tonnen V- und Ni-haltige Rückstände mit der Zusammensetzung

| | |
|---|---|
| V | 18 % |
| Ni | 7 % |
| S | 10 % |
| C | 15 % |
| Feuchte | 23 % |

zusammen mit 1,75 Tonnen Soda eingefüllt und auf die Schmelztemperatur von ca. 900 °C aufgeheizt. Der Trommelofen 4 wird dabei gedreht.

Die Einschmelzenergie wird über den Feststoffbrenner 5 zugeführt, der ebenfalls mit einem V-/Ni-haltigen Rückstand mit der Zusammensetzung

| | |
|---|---|
| V | 11 % |
| Ni | 4 % |
| C | 32% |
| S | 13 % |
| Feuchte | 0,2% |

sowie mit Sauerstoff als Oxidationsmittel betrieben wird. Zur Vermeidung von unerwünschten Schwefeldioxid-Emissionen werden dem Feststoffbrenner 5 zusätzlich 20 % Soda, bezogen auf den Feststoffdurchsatz des Brenners 5 zugeführt, wodurch das bei der Verbrennung entstehende Schwefeldioxid als Natriumverbindung abgebunden wird. Der Sauerstoffdurchsatz wird im stöchiometrischen Verhältnis zur Verbrennung des Kohlenstoffs zu CO₂ dosiert. Der Zusatz von Soda bewirkt zusätzlich, dass die bei der Verbrennung entstehende Asche aufschmilzt und das enthaltene Vanadium in die wasserlösliche Vanadiumverbindung Na₄V₂O₇ überführt wird. Die Schmelze des Brenners 5 vereinigt sich mit der Schmelze im Kurztrommelofen 4.

Unter den beschriebenen Bedingungen bildet sich auch Nickelsulfid (Nickelstein) als eigene, schmelzflüssige Phase.

Nach ca. 6 - 8 h Schmelzzeit ist die Bildung von Natriumvanadat und Nickelstein abgeschlossen. Der Kurztrommelofen 4 wird dann am Abstichloch geöffnet und die beiden Schmelzphasen gemeinsam in Stahlkokillen abgestochen.

Nach dem Erkalten, welches ca. 30 h dauert, werden die Kokillen entleert und der Nickelstein von der Natriumvanadatschlacke mechanisch abgetrennt.

### Ausführungsbeispiel 2

In den Kurztrommelofen 4 werden 2,5 Tonnen V- und Ni-haltige Rückstände mit der Zusammensetzung

| | |
|---|---|
| V | 18 % |
| Ni | 7 % |
| S | 10 % |
| C | 15 % |
| Feuchte | 23 % |

zusammen mit 1,75 Tonnen Soda eingefüllt und auf die Schmelztemperatur von ca. 900 °C aufgeheizt. Der Trommelofen 4 wird dabei gedreht.

Die Einschmelzenergie wird über den Feststoffbrenner 5 zugeführt, der ebenfalls mit einem V-/Ni-haltigen Rückstand mit der Zusammensetzung

| | |
|---|---|
| V | 6% |
| Ni | 3 % |
| C | 11 % |
| S | 14 % |
| Feuchte | 0,2% |

sowie mit Sauerstoff als Oxidationsmittel betrieben wird. Zur Vermeidung von unerwünschten Schwefeldioxid-Emissionen werden dem Feststoffbrenner zusätzlich 25 % Soda, bezogen auf den Feststoffdurchsatz des Brenners 5 zugeführt, wodurch das bei der Verbrennung entstehende Schwefeldioxid als Natriumverbindung abgebunden wird. Da der Heizwert des eingesetzten Brennstoffs nicht ausreicht, um die erforderliche Schmelztemperatur zu erreichen, wird dem Feststoffbrenner 5 zusätzlich Erdgas zugeführt, um den Heizwert zu erhöhen. Der Erdgaszusatz wird so gewählt, dass das Brennstoffgemisch einen Heizwert von ca. 15 MJ/kg enthält. Der Sauerstoffdurchsatz wird im stöchiometrischen Verhältnis zur Verbrennung des Kohlenstoffs aus dem Brennstoff und des Erdgases zu CO₂ zudosiert. Der Zusatz von Soda bewirkt zusätzlich, dass die bei der Verbrennung entstehende Asche aufschmilzt und das enthaltene Vanadium in die wasserlösliche Vanadiumverbindung Na₄V₂O₇ überführt wird. Die Schmelze des Brenners 5 vereinigt sich mit der Schmelze im Kurztrommelofen 4.

Unter den beschriebenen Bedingungen bildet sich auch Nickelsulfid (Nickelstein) als eigene, schmelzflüssige Phase.

Nach dem Abstich und dem Erkalten, welches ca. 30 h dauert, werden die Kokillen entleert und der Nickelstein von der Natriumvanadatschlacke mechanisch abgetrennt.

## Patentansprüche

1. Verfahren zur Herstellung eines schwermetallangereicherten, kohlenstoffarmen Konzentrats aus kohlenstoffreichen, schwermetallhaltigen Rückständen insbesondere der Erdölverarbeitung, umfassend ein Verbrennen des kohlenstoffreichen, schwermetallhaltigen Rückstandes in einem Feststoffbrenner (5) unter Abreicherung des Kohlenstoffgehaltes und Bildung eines kohlenstoffarmen, schwermetallangereicherten Verbrennungsproduktes,
**dadurch gekennzeichnet, dass** zur Bildung eines schwermetallhaltigen, wasserlöslichen Schmelzproduktes das Verbrennungsprodukt unter Zugabe von Soda in einen Schmelzofen (4) eingebracht wird, und
**dass** dem Feststoffbrenner (5) zusätzlich Soda zu dem kohlenstoffreichen, schwermetallhaltigen Rückstand zugeführt wird.

2. Verfahren nach Anspruch 1 , **dadurch gekennzeichnet, dass** die bei der Verbrennung im Feststoffbrenner (5) entstehende Abwärme zur Energieerzeugung, vorzugsweise zur Beheizung des genannten Schmelzofens (4) genutzt wird.

3. Verfahren nach einem der vorgenannten Ansprüche, **dadurch gekennzeichnet, dass** der Feststoffbrenner (5) mit Sauerstoff als Oxidationsmittel beschickt wird.

4. Verfahren nach Anspruch 3, **dadurch gekennzeichnet, dass** der Sauerstoffdurchsatz im stöchiometrischen Verhältnis zur Verbrennung des enthaltenen Kohlenstoffs zu Kohlendioxid eingestellt wird.

5. Verfahren nach einem der vorgenannten Ansprüche, **dadurch gekennzeichnet, dass** die Menge des zugeführten Soda etwa 20%-80% bezogen auf den Feststoffdurchsatz des Brenners (5) beträgt.

6. Verfahren nach einem der vorgenannten Ansprüche, **dadurch gekennzeichnet, dass** bei Vorhandensein von Nickel-Anteilen in vanadiumhaltigen Rückständen unter der Zugabe von Soda neben der schmelzflüssigen Phase von Natrium-Vanadat eine weitere schmelzflüssige Phase aus Nickelstein gebildet wird.

7. Verfahren nach einem der vorgenannten Ansprüche, **dadurch gekennzeichnet, dass** die kohlenstoffreichen, schwermetallhaltigen Rückstände in Dichtstromförderung dem Feststoffbrenner (5) zugeführt werden.

8. Verfahren nach einem der vorgenannten Ansprüche, **dadurch gekennzeichnet, dass** bei nicht ausreichendem Heizwert der eingesetzten kohlenstoffreichen, schwermetallhaltigen Rückstände ein Hilfsbrennstoff, insbesondere Erdgas, zusätzlich in den Feststoffbrenner (5) eingeführt wird.

## Claims

1. Method for the production of a heavy-metal-enriched, low-carbon concentrate of carbon-rich, heavy-metal-containing residues, in particular from crude oil processing, comprising a combustion of the carbon-rich, heavy-metal-containing residues in a solid fuel burner (5), resulting in the reduction of the carbon content and in the formation of a low-carbon heavy-metal-enriched combustion product,
**characterized in that** for forming a heavy-metal-containing, watersoluble melting product, the combustion product is introduced into a melting furnace (4) with the addition of soda, and
**that** an additional quantity of soda is supplied to the carbon-rich, heavy-metal-containing residue in the solid fuel burner (5).

2. Method according to claim 1, **characterized in that** the waste heat produced by the combustion in the solid fuel burner (5) is used for power generation, preferably for heating the mentioned melting furnace (4).

3. Method according to one of the preceding claims, **characterized in that** an oxidizing agent in the form of oxygen is supplied to the solid fuel burner (5).

4. Method according to claim 3, **characterized in that** the oxygen throughput is adjusted in terms of the stoichiometric relationship for the combustion of the contained carbon to form carbon dioxide.

5. Method according to one of the preceding claims, **characterized in that** the quantity of the supplied soda is approximately 20% - 80% with respect to the solids throughput of the burner (5).

6. Method according to one of the preceding claims, **characterized in that** if quantities of nickel are present in vanadium-containing residues, another molten phase of nickel matte is formed along with the molten phase of sodium vanadate when adding soda.

7. Method according to one of the preceding claims, **characterized in that** the carbon-rich, heavy-metal-containing residues are supplied to the solid fuel burner (5) as a dense-phase flow.

8. Method according to one of the preceding claims, **characterized in that** if the lower heating value of the used carbon-rich, heavy-metal-containing residues is not sufficient, an auxiliary fuel, in particular natural gas, is additionally introduced into the solid fuel burner (5).

## Revendications

1. Procédé de fabrication d'un concentré enrichi en métaux lourds et pauvre en carbone à partir de résidus riches en carbone, contenant des métaux lourds, notamment dans le traitement du pétrole, comprenant une combustion du résidu riche en carbone contenant des métaux lourds dans un brûleur de matières solides (5) par appauvrissement de la teneur en carbone et formation d'un produit de combustion pauvre en carbone et enrichi en métaux lourds, **caractérisé en ce que**, pour former un produit fondu soluble dans l'eau, contenant des métaux lourds, le produit de combustion est introduit dans un four de fusion (4) avec addition de soude, et
**en ce qu**'est amenée au brûleur de matières solides (5) de la soude ajoutée au résidu riche en carbone contenant des métaux lourds.

2. Procédé selon la revendication 1, **caractérisé en ce que** la chaleur perdue générée lors de la combustion dans le brûleur de matières solides (5) est utilisée pour la production d'énergie, de préférence pour le chauffage dudit four de fusion (4).

3. Procédé selon l'une des revendications précédentes, **caractérisé en ce que** l'on introduit dans le brûleur de matières solides (5) de l'oxygène en tant qu'agent d'oxydation.

4. Procédé selon la revendication 3, **caractérisé en ce que** le débit d'oxygène est réglé dans le rapport stoechiométrique pour la combustion du carbone contenu en dioxyde de carbone.

5. Procédé selon l'une des revendications précédentes, **caractérisé en ce que** la quantité de la soude amenée est d'environ 20% à 80%, rapportée au débit de matières solides du brûleur (5).

6. Procédé selon l'une des revendications précédentes, **caractérisé en ce qu'**en présence de parts de nickel dans des résidus contenant du vanadium, on forme, par l'addition de soude, outre la phase en fusion de vanadate de sodium, une autre phase en fusion de matte de nickel.

7. Procédé selon l'une des revendications précédentes, **caractérisé en ce que** les résidus riches en carbone, contenant des métaux lourds, sont amenés au brûleur de matières solides (5) par transfert en phase dense.

8. Procédé selon l'une des revendications précédentes, **caractérisé en ce qu'**en cas de pouvoir calorifique insuffisant des résidus riches en carbone contenant des métaux lourds utilisés, on ajoute dans le brûleur de matières solides (5) un carburant auxiliaire, notamment du gaz naturel.
